(19) Europäisches Patentamt
European Patent Office
Office européen des brevets

(11) **EP 1 406 067 B1**

(12) **EUROPÄISCHE PATENTSCHRIFT**

(45) Veröffentlichungstag und Bekanntmachung des Hinweises auf die Patenterteilung:
**09.10.2013 Patentblatt 2013/41**

(51) Int Cl.:
***G01D 5/14*** *(2006.01)*

(21) Anmeldenummer: **03009024.5**

(22) Anmeldetag: **17.04.2003**

(54) **Hochgenauer Hall-Sensor mit mehreren Kontaktpaaren**

High precision Hall sensor with multiple contact pairs

Capteur de Hall de haute précision avec plusieurs paires de contacts

(84) Benannte Vertragsstaaten:
**CH DE FR GB IT LI**

(30) Priorität: **31.08.2002 DE 10240239**

(43) Veröffentlichungstag der Anmeldung:
**07.04.2004 Patentblatt 2004/15**

(73) Patentinhaber: **ROBERT BOSCH GMBH**
**70442 Stuttgart (DE)**

(72) Erfinder:
• **Hauenstein, Henning**
**72762 Reutlingen (DE)**
• **Ernst, Stephan**
**73760 Ostfildern (DE)**
• **Feiler, Wolfgang**
**72766 Reutlingen (DE)**

(56) Entgegenhaltungen:
**EP-A1- 0 202 508  DE-A1- 10 137 294**
**GB-A- 1 141 524   US-A1- 2002 008 513**
**US-B1- 6 433 535**

**Beschreibung**

Die Erfindung betrifft einen Hall-Sensor gemäß dem Oberbegriff des Patentanspruchs 1.

Magnetfeldsensoren werden in einer Vielzahl von Anwendungen benutzt, um z.B. Drehbewegungen und insbesondere Drehwinkel berührungslos zu messen oder zu kontrollieren. Ein Beispiel aus dem Automobilbereich ist die Ermittlung der Drehrate eines Elektromotors, die Drehfrequenz eines Rades in ABS-Anwendungen oder die Messung des Drehmomentes einer Torsionsstange in der Lenksäule eines Kfz.

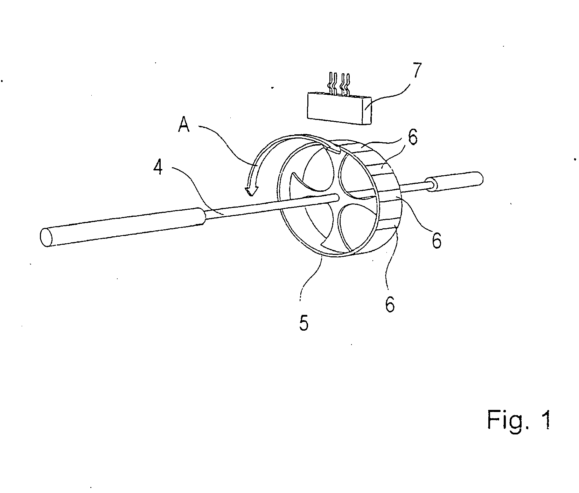

Eine aus dem Stand der Technik bekannte Applikation mit Magnetfeldsensor ist in Fig.1 dargestellt. Fig.1 zeigt eine Anordnung mit einer Welle 4, an der ein Polrad 5 mit permanent magnetischen Bereichen 6 befestigt ist. Am Aussenumfang des Polrades 5 ist in geringem Abstand ein Magnetfeldsensor 7 stationär angeordnet. Als Magnetfeldsensor können z.B. Hallsensoren, magnetoresistive Widerstände, Magnetotransistoren etc. verwendet werden. Dreht sich die Welle 4 in Richtung des Pfeils A, so wird das Magnetfeld der Bereiche 6 und somit die Winkelstellung der Welle 4 durch den Sensor 7 erfasst.

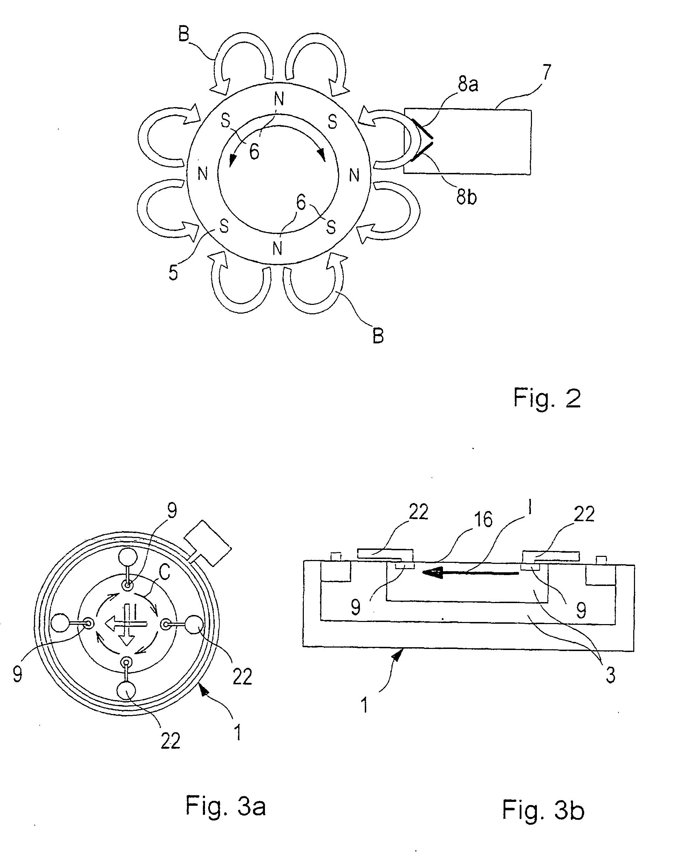

Fig. 2 zeigt eine vergrößerte Ansicht der Anordnung von Fig. 1, in der das von den magnetischen Bereichen 6 des Polrades 5 erzeugte magnetische Feld B durch gekrümmte Pfeile B angedeutet ist. Der MR-Sensor 7 (MR: magnetoresistiv) umfasst zwei MR-Sensorelemente 8a, 8b, die mit ihrer sensitiven Achse unter einem Winkel von 90° zueinander angeordnet sind.

MR- Sensoren, die wie in Fig. 2 dargestellt angeordnet sind, haben den Vorteil, dass der Cosinus- und Sinus-Anteil des magnetischen Feldes B direkt erfasst und aus der Berechnung des Tangens der Drehwinkel der Welle 4 sehr genau bestimmt werden kann. Die gemessene Widerstandsänderung des MR- Sensors 7 beruht auf einer Drehung des Magnetfeldes relativ zur sensitiven Achse der Sensorelemente 8a, 8b.

Vorzugsweise werden jedoch Hall- Elemente als Magnetfeldsensoren verwendet, die im Gegensatz zu MR- Sensoren in den meisten Standard- Halbleiterprozessen einfach herstellbar sind. Besonders vorteilhaft ist hierbei, dass die Ansteuer- und Auswerteelektronik zusammen mit den Hall- Sensoren als ASIC, z.B. in einem BCD- Prozess (Bipolar- CMOS- DMOS), monolithisch auf einem Chip integriert werden kann. Somit ist es möglich, einen intelligenten Sensor mit kompletter Ansteuer- und Auswertelogik herzustellen.

Hall- Sensoren haben jedoch den Nachteil, dass sie zum Driften des Nullfeld- Offsets (endliches Hall- Spannungssignal, auch wenn kein Magnetfeld am Sensor anliegt) neigen. Der Offset wird z.T. bereits bei der Herstellung im Hall- Element eingebaut und bleibt während der Lebensdauer des Elements nicht konstant. Abhilfe schaffen sogenannte Spinning- Currentoder "gechoppte" Hall- Elemente, mit denen der Offset kompensiert werden kann.

Fig. 3a und 3b zeigen ein Spinning- Current- Hall- Element in Draufsicht bzw. Seitenansicht. Der Betriebsstrom I wird dabei jeweils zwischen zwei gegenüberliegenden Kontaktdiffusionen 9 im Kreis rotierend angelegt (Pfeil C) oder auch nur zwischen orthogonalen Kontaktdiffusionen 9 hin und her geschaltet. Die Hall- Spannung wird dabei an den beiden orthogonal zur Stromrichtung liegenden Kontaktdiffusionen 9 bzw. Anschlüssen 22 abgegriffen. Durch den 360°- Spinning- Betrieb können asymmetrische Beiträge und Offsetkomponenten in der gemessenen Hall- Spannung kompensiert werden.

Fig. 3b zeigt nochmals einen Querschnitt durch einen Sensorchip 1 mit verschieden Dotierbereichen 3. Der Betriebsstrom I fließt vom einem rechten Kontaktgebiet 9 zu einem linken Kontaktgebiet 9, wobei die Hall-Spannung an den senkrecht zur Bildebene angeordneten Kontaktgebieten 9 (nicht gezeigt) abgegriffen wird.

Eine hochgenaue Winkelmessung mit einem solchen Spinning- Current- Sensor ist jedoch kompliziert, da der Sensor nur auf Magnetfelder senkrecht zur Chipebene 16 sensitiv reagiert. Soll eine Winkelmessung wie in Fig. 2 durchgeführt werden, müssten zwei separate Spinning- Current- Hall- Sensoren 1 in einem definierten Winkel zueinander angeordnet werden, um so die beiden entsprechenden Winkelkomponenten des Magnetfeldes B zu bestimmen. Dies erfordert höchste Justagegenauigkeit, um den Winkel zwischen den Hall- Sensoren 1 exakt einzustellen. Ferner ist es nur schwer möglich, die beiden Hall- Sensoren 1 so nahe beieinander anzuordnen, dass das Magnetfeld B hinreichend genau am selben Ort gemessen werden kann. Außerdem sind die beiden getrennten Hall- Sensoren 1 thermisch entkoppelt und können so zu unterschiedlichen thermischen Driften führen, was nur schwer kompensiert werden kann.

Aus der Zeitschrift Sensor Review, Vol. 18, Nr. 4, 1998, pp 252-257, C. Schott et al.: "Modern integrated silicon Hall sensors" ist ein Hall-Sensor zum Messen von Drehwinkeln oder Drehraten bekannt, der mehrere Kontaktpaare zum Abgriff mehrerer Hall-Spannungen aufweist, aus denen eine Auswerteeinheit eine Winkel- oder Drehzahlinformation ermitteln kann. Ferner ist aus der EP 0 202 508 A1 ein Hall-Sensor mit mehreren Kontakten bekannt, die an der Oberfläche des Sensors angeordnet sind.

Es ist daher die Aufgabe der vorliegenden Erfindung, einen Hall-Sensor zu schaffen, der wesentlich einfacher herzustellen ist und gleichzeitig eine hohe Messgenauigkeit bietet.

Gelöst wird diese Aufgabe gemäß der Erfindung durch die im Patentanspruch 1 angegebenen Merkmale. Weitere Ausgestaltungen der Erfindung sind Gegenstand von Unteransprüchen.

Der wesentliche Gedanke der Erfindung besteht darin, einen Hall-Sensor zu realisieren, der mehrere Kontaktpaare aufweist, an denen mehrere Hall-Spannungen (in einer Messung bzw. Messposition) abgegriffen werden. Daraus kann eine Auswerteeinheit wiederum eine Drehrate oder den Winkel ermitteln, in dem das äußere Magnetfeld auf den Sensor gerichtet ist. Hall-Element und Auswertelogik können dabei monolithisch auf einem Chip integriert sein. Die Kontakte sind vorzugsweise um den Betriebsstrom herum, versetzt zueinander angeordnet.

Der wesentliche Vorteil dieser Anordnung besteht darin, dass nur ein einzelnes Hall-Element vorhanden ist, das relativ zum Magnetfeld positioniert werden muss. Somit entfällt die bisher erforderliche Justage mehrerer Hall-Elemente. Außerdem ist der Sensor bei Anwendung der erfindungsgemäßen Auswertemethode von der absoluten Feldstärke unabhängig und reagiert nur auf den Winkel, nicht dagegen auf die Stärke des Magnetfeldes. Die Anordnung des Sensors relativ zu dem zu messenden Magnetfeld ist daher unkritisch.

Der Hall-Sensor umfasst vorzugsweise wenigstens zwei Kontaktpaare mit insgesamt wenigstens drei, vorzugsweise wenigstens vier Hall-Kontakten zum Abgreifen wenigstens zweier Hall-Spannungen, aus denen sich die Winkel- bzw. Drehzahlinformation errechnen lässt. Im Falle von drei Kontakten könnten die beiden Hall-Spannungen jeweils zwischen einem auf dem Sensor befindlichen Kontakt und einem Bezugspotential gemessen werden. Der Kontakt des Bezugspotentials muss nicht unbedingt ebenfalls auf dem Sensor angeordnet sein; ein externes Bezugspotential ist ebenfalls möglich.

Gemäss einer bevorzugten Ausführungsform der Erfindung ist das Hall-Element in einem Chip integriert, bei dem die Hall-Kontakte auf der Oberfläche des Chips angeordnet sind und der Betriebsstrom senkrecht zur Oberfläche durch den Chip fließt.

Auf diese Weise kann ein kostengünstiges Sensorelement in Standard-Halbleiterprozessen hergestellt werden. Die Kontakte können wahlweise auch umfangsseitig auf dem Chip oder im Chip angeordnet sein. Im letzteren Fall müssten die Kontakte aus dem Chip herausgeführt werden.

Vorzugsweise sind die Kontakte für das Abgreifen der Hall-Spannung rotationssymmetrisch um den zentralen Betriebsstrom herum angeordnet. Dies ermöglicht wegen der gleich großen Kontaktabstände eine besonders einfache Auswertung. Andere Anordnungen der Kontaktpositionen sind gleichfalls denkbar. Die Kontakte der Kontaktpaare sind vorzugsweise punktsymmetrisch um einen gemeinsamen Mittelpunkt angeordnet.

Der Winkel des äußeren Magnetfeldes wird vorzugsweise durch Auswertung der Hall-Spannung wenigstens zweier Kontaktpaare bestimmt. Die Messung der Hall-Spannung an den Kontakten kann entweder gleichzeitig oder zeitlich kurz nacheinander erfolgen.

Die Messung der Hall-Spannungen erfolgt vorzugsweise an zwei orthogonal zueinander angeordneten Kontaktpaaren. Daraus läßt sich in besonders einfacher Weise durch Bildung des Arcustangens der aktuelle Winkel des Magnetfeldes bestimmen. Selbstverständlich können auch nicht-orthogonal zueinander liegende Kontaktpaare ausgewertet werden. In diesem Fall ist aber zusätzlicher Rechenaufwand zur Bestimmung des Winkels nötig.

Gemäss einer bevorzugten Ausführungsform der Erfindung werden bei einer Messung mehr als zwei, vorzugsweise alle Kontaktpaare des Hall-Elements abgetastet. Dabei werden Offsetbeiträge und Asymmetrien mitgemessen, die beispielsweise von einer ungenauen, nicht vollständig symmetrischen Anordnung der Kontakte stammen. Derartige Störbeiträge können relativ einfach eliminiert bzw. reduziert werden:.

Bei der Auswertung der Hall-Spannungen kann z.B. die Stromrichtung des Betriebsstroms umgekehrt und die Hall-Spannung an den Kontaktpaaren bei beiden Stromrichtungen gemessen werden. Dadurch lassen sich insbesondere von Hysterese-Effekten verursachte Offsetkomponenten eliminieren.

Eine weitere Möglichkeit zur Korrektur der Messsignale besteht darin, die im Messsignal enthaltenen Störbeiträge mittels eines geeigneten Filters auszufiltern. Das bereinigte Messsignal wird schliesslich zur Auswertung des Drehwinkels herangezogen, wodurch die Messgenauigkeit noch weiter verbessert werden kann.

Die Erfindung wird nachstehend anhand der beigefügten Zeichnungen beispielhaft näher erläutert. Es zeigen:

Fig. 1 eine schematische Darstellung einer Messanordnung mit einem MR-Magnetfeldsensor;

Fig. 2 eine vergrößerte Darstellung des Polrades von Fig. 1;

Fig. 3a, b verschiedene Ansichten eines bekannten Spinning- Current- Hall- Elements;

Fig. 4 eine Ausführungsform eines hochgenauen Magnetfeldsensors gemäss der Erfindung;

Fig. 5 eine mögliche Messkurve des Magnetfeldsensors von Fig. 4; und

Fig. 6 ein Fourierspektrum eines Signals von Fig. 5.

Bezüglich der Erläuterungen der Fig. 1, 2, 3a, und 3b wird auf die Beschreibungseinleitung verwiesen.

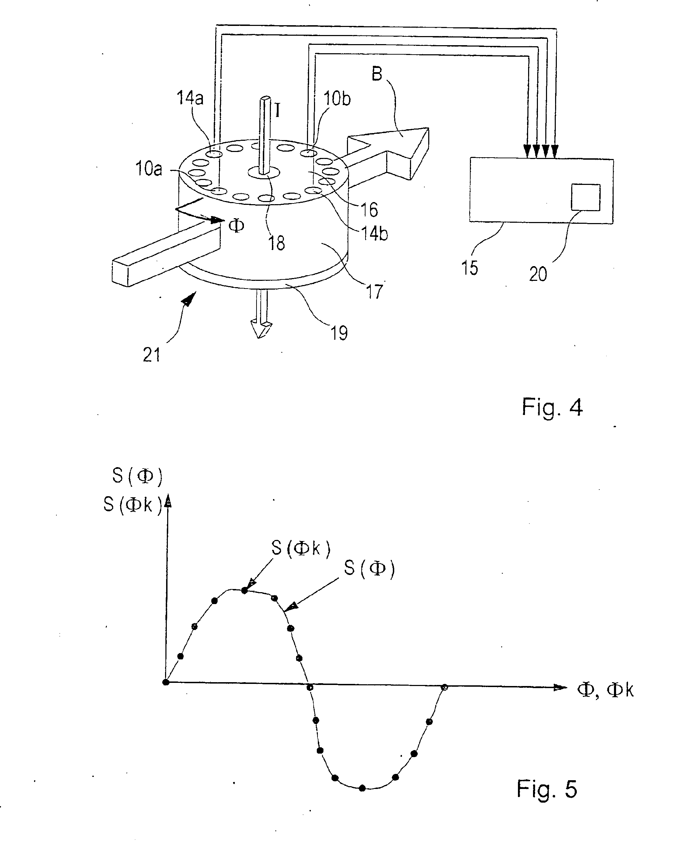

Fig. 4 zeigt einen Magnetfeldsensor mit einem Hall-Element 21, das zusammen mit einer Auswertelogik 15 monolithisch in einen Chip integriert ist. Das Hall-Element 21 besteht aus einem Substrat 17, auf dem mehrere Kontakte 10a,10b - 14a,14b zum Abgreifen einer Hall-Spannung angeordnet sind. Der Betriebsstrom I ist senkrecht zur Chipoberfläche 16 gerichtet und wird über die Kontakte 18,19 in das Substrat 17 eingeleitet.

Der Betriebsstrom I ist i.d.R. ein Gleichstrom, der von der Vorder- zur Chiprückseite oder umgekehrt fließt. Wahlweise kann auch ein sinusförmiger Wechselstrom oder ein getakteter Strom als Betriebsstrom verwendet werden.

Die Hall- Spannung wird an den symmetrisch um den zentralen Stromfluss I angeordneten Kontakten 10a, 10b- 14a, 14b gemessen. Besonders vorteilhaft ist hierbei eine rotationssymmetrische Anordnung der Kontakte 10a, 10b- 14a, 14b. Denkbar sind jedoch auch andere Kontaktanordnungen um den vertikalen Strompfad, wie z.B. eine Anordnung auf der äußeren Umfangsfläche.

Der Magnetfeldsensor benötigt wenigstens zwei Kontaktpaare, an denen wenigstens zwei Hallspannungen abgegriffen werden können. In der dargestellten Ausführungsform sind exemplarisch 16 Kontakte 10a,10b - 14a,14b gezeichnet.

Das zu messende Magnetfeld B, das z.B. von einem Permanentmagneten, wie er in Fig. 1 dargestellt ist, stammen kann, liegt parallel zur Chipebene 16. Ist das Magnetfeld B ausserhalb der Chipebene 16 orientiert, detektiert der Magnetfeldsensor nur den entsprechenden in der Ebene 16 verlaufenden Anteil des Magnetfeldes B.

Die Hall- Spannung wird vorteilhaft an zwei orthogonal angeordneten Kontaktpaaren 10a, 10b; 14a, 14b gemessen. Wahlweise kann das Messsignal $S(\Phi)$ auch an Kontaktpaaren 10a, 10b- 14a, 14b abgegriffen werden, die nicht orthogonal angeordnet sind. Die Auswertung erfordert in diesem Fall jedoch einen höheren Rechenaufwand.

Bei einer Messung an zwei orthogonal angeordneten Kontaktpaaren 10a,10b - 14a,14b lässt sich der Winkel $\Phi$ des Magnetfeldes B unmittelbar aus folgender Beziehung ableiten:

$$\Phi = \arctan\ [S(\Phi_k)/S(\Phi_{k+90°})].$$

Hierbei ist $\Phi$ der Winkel relativ zu einer vorgegebenen Bezugsrichtung, die z.B. durch ein beliebiges Kontaktpaar (10a,10b) festgelegt werden kann.

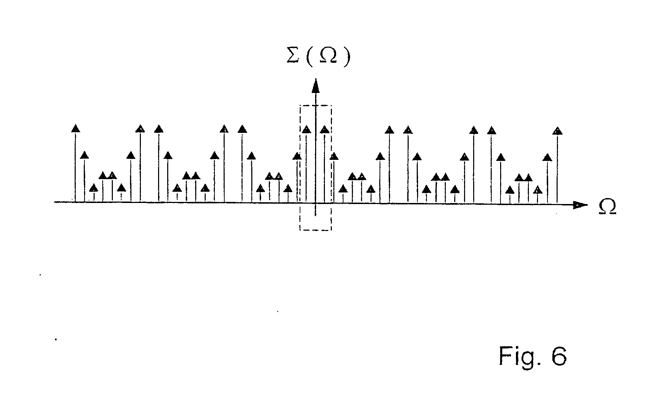

Durch Abtasten von mehr als zwei Kontaktpaaren, insbesondere sämtlicher Kontaktpaare 10a, 10b- 14a, 14b, ist es ferner möglich, Störbeiträge zu reduzieren bzw. im Idealfall zu eliminieren. Störbeiträge können beispielsweise durch Justagefehler der Kontakte 10a, 10b- 14a, 14b, richtungsabhängige Stromtransporteigenschaften des Substrats 17 oder Hystereseeigenschaften entstehen, die zusätzliche Signalbeiträge liefern. Ein bevorzugtes Fehlerkompensationsverfahren wird nachfolgend anhand der Fig. 5 und 6 erläutert:

Fig. 5 zeigt das Messsignal $S(\Phi_k)$ an diskreten Messpunkten k, die durch die Anordnung der Kontakte 10a,10b - 14a,14b bestimmt sind. Wäre der Magnetfeldsensor ideal, so wäre $S(\Phi)$ sinusförmig und $S(\Phi_k)$ wären Abtastpunkte auf der sinusförmigen Kurve. Wegen der genannten Störeffekte kommt es jedoch zu Abweichungen von der Idealkurve.

Fig. 6 zeigt das zugehörige Signalspektrum $\Sigma(\Omega)$. Neben den eingerahmten Spektrallinien einer optimalen Sinuskurve sind periodisch wiederkehrende Signalanteile - die Störbeiträge - bei höheren Frequenzen zu erkennen. Durch eine geeignete Filterung ist es möglich, diese Störbeiträge zu unterdrücken.

Der Offset im Messsignal $S(\Phi)$ lässt sich somit wirkungsvoll reduzieren. Der zugehörige Filter ist vorzugsweise in der Auswerteeinheit 15 angeordnet.

Durch die Filterung entsteht ein um Störbeiträge bereinigtes Signal $Sf(\Phi_k)$, aus dem der Winkel $\Phi$ des Magnetfeldes B in einfacher Weise nach folgender Beziehung abgeleitet werden kann:

$$\Phi = \arctan\ [Sf(\Phi_k)/Sf(\Phi_{k+90°})].$$

Wie erwähnt, können die Störbeiträge im Messsignal auch mittels einer anderen Methode eliminiert werden, bei der der Betriebsstrom I während der Auswertung in die Gegenrichtung umgepolt wird. Durch Messung der Hall-Spannung an einem Kontaktpaar 10a, 10b- 14a, 14b jeweils bei Stromfluss in einer ersten Stromrichtung und der Gegenrichtung lassen sich asymmetrische Beiträge und Offsetkomponenten in einfacher Weise herausrechnen.

Bezugszeichenliste

| | |
|---|---|
| 1 | Hall- Sensor |
| 2 | Betriebsstrom |
| 3 | Dotierbereiche |
| 4 | Welle |
| 5 | Polrad |
| 6 | magnetische Bereiche |
| 7 | Magnetfeldsensor |
| 8a, 8b | MR- Sensorelemente |
| 9 | Kontaktdiffusionsgebiete |
| 10a, b- 14a, b | Kontakte |
| 15 | Auswertelogik |
| 16 | Chipoberfläche |
| 17 | Substrat |
| 18 | Vorderseitiger Kontakt |
| 19 | Rückseitiger Kontakt |
| 20 | Filter |
| 21 | Hall- Sensor |
| 22 | Anschlüsse |
| S (Φ) | Messsignal |

## Patentansprüche

1. Hall-Sensor, insbesondere für die Messung von Drehwinkeln oder Drehzahlen, in dem ein Betriebsstrom (1) fließt und , der mehrere Kontaktpaare (10a, 10b-14a, 14b) zum Abgriff mehrerer Hall-Spannungen bei Vorliegen eines magnetischen Feldes (B) aufweist, aus denen eine Auswerteeinheit (15) eine Winkel- oder Drehzahlinformation ermitteln kann, wobei die Kontaktpaare (10a, 10b-14a, 14b) an der Oberfläche (16) des Hall-Sensors (21) angeordnet sind, und der Betriebsstrom (1) senkrecht zur Oberfläche (16) durch den Sensor (21) fließt, **dadurch gekennzeichnet, dass** die Kontakte der Kontaktpaare (10a, 10b-14a, 14b) rotationssymmetrisch um den Betriebsstrom (1) herum angeordnet sind und dass die Hall-Spannungen an wenigstens zwei Kontaktpaaren (10a, 10b-14a, 14b) in derselben Messposition abgegriffen werden.

2. Hall-Sensor nach Anspruch 1, **dadurch gekennzeichnet, dass** die einzelnen Hall-Spannungen gleichzeitig abgegriffen werden.

3. Hall-Sensor nach einem der vorhergehenden Ansprüche, **dadurch gekennzeichnet, dass** die Auswerteeinheit (15) einen Filter (20) aufweist, mit dem Störbeiträge im Hall-Messsignal (S(D)) ausgefiltert werden, wobei das gesäuberte Messsignal (Sf (D)) zur Auswertung des Drehwinkels (c) oder der Drehrate herangezogen wird.

## Claims

1. Hall sensor, in particular for measuring rotation angles or rotational speeds, in which an operating current (1) flows and which has a plurality of contact pairs (10a, 10b-14a, 14b) for tapping a plurality of Hall voltages in the presence of a magnetic field (B) from which an evaluation unit (15) can determine an item of information relating to angle or rotational speed, the contact pairs (10a, 10b-14a, 14b) being arranged on the surface (16) of the Hall sensor (21), and the operating current (1) flowing through the sensor (21) perpendicular to the surface (16), **characterized in that** the contacts of the contact pairs (10a, 10b-14a, 14b) are arranged with rotational symmetry around the operating current (1), and **in that** the Hall voltages are tapped at at least two contact pairs (10a, 10b-14a, 14b) in the same measurement position.

2. Hall sensor according to Claim 1, **characterized in that** the individual Hall voltages are tapped simultaneously.

3. Hall sensor according to one of the preceding claims, **characterized in that** the evaluation unit (15) has a filter (20) with the aid of which interference contributions in the Hall measurement signal (S(D)) are filtered out, the cleaned measurement signal (Sf(D)) being used to evaluate the rotation angle (c) or the rate of rotation.

**Revendications**

1.  Capteur à effet Hall, notamment pour la mesure d'angles de rotation ou de vitesses de rotation, dans lequel circule un courant de service (1) et qui présente plusieurs paires de contacts (10a, 10b-14a, 14b) pour prélever plusieurs tensions Hall en présence d'un champ magnétique (B), à partir desquelles une unité d'interprétation (15) peut déterminer une information angulaire ou de vitesse de rotation, les paires de contacts (10a, 10b-14a, 14b) étant disposées sur la surface (16) du capteur à effet Hall (21) et le courant de service (1) circulant perpendiculairement à la surface (16) à travers le capteur (21), **caractérisé en ce que** les contacts des paires de contacts (10a, 10b-14a, 14b) sont disposés en symétrie rotationnelle autour du courant de service (1) et **en ce que** les tensions Hall sur au moins deux paires de contacts (10a, 10b-14a, 14b) sont prélevées dans la même position de mesure.

2.  Capteur à effet Hall selon la revendication 1, **caractérisé en ce que** les tensions Hall individuelles sont prélevées simultanément.

3.  Capteur à effet Hall selon l'une des revendications précédentes, **caractérisé en ce que** l'unité d'interprétation (15) présente un filtre (20) avec lequel les composantes parasites présentes dans le signal de mesure Hall (S(D)) peuvent être éliminées par filtrage, le signal de mesure nettoyé (Sf(D)) étant utilisé pour interpréter l'angle de rotation (c) ou la fréquence de rotation.

Fig. 1

7

Fig. 2

Fig. 3a

Fig. 3b

Fig. 4

Fig. 5

Σ ( Ω )

Ω

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0202508 A1

**In der Beschreibung aufgeführte Nicht-Patentliteratur**

- **C. SCHOTTT et al.** Modern integrated silicon Hall sensors. *Zeitschrift Sensor Review,* 1998, vol. 18 (4), 252-257